# EUROPEAN PATENT SPECIFICATION

(11) **EP 1 346 860 B1**
(45) Date of publication and mention of the grant of the patent: **15.06.2005**
(21) Application number: 02380254.9
(22) Date of filing: 10.12.2002
(51) Int. Cl.: B60H 1/34, B60K 37/04, B60H 1/00, B62D 25/14

(54) **Automobile Dashboard with a two-parts air grille**
Instrumenttafel mit einem zweiteiligen Lüftungsgitter
Planche de bord et sa grille d'aériation en deux parties

(30) Priority: 22.03.2002 ES 200200716
(43) Date of publication of application: 24.09.2003
(73) Proprietor: Seat, S.A., 08040 Barcelona (ES)
(72) Inventor: Martos Ortega, Antonio, 08040 Barcelona (ES); Rodriguez Tellez, Manuel, 08040 Barcelona (ES)
(74) Representative: Davila Baz, Angel

(56) References cited:
- US-A- 5 762 395

## Description

The present invention relates to an automobile dashboard with an air orientation grille for defogging the windshield.

More specifically, the dashboard of the invention is of the type that is provided on the top of its anterior area with a longitudinal opening for air passage, with a small width compared to its length, in which is mounted a grille meant to direct the air towards the surface of the windshield for de-fogging it.

Low temperatures cause external frosting and internal fogging of automobile windshields. Dashboards have conducts for directing hot air towards said areas through a grille located on the top of the dashboard, facing the windshield. Normally, the various parts comprising these grilles are joined to each other and to the dashboards by welding or mechanical means, in any case such that disassembling the grilles for their replacement or repair when needed is prevented or hindered.

An automobile dashboard according the preamble of claim 1 is disclosed in document US 5762395 A.

The object of the present invention is to eliminate the aforementioned drawbacks by a dashboard of the type described above in which the orientation grille is constructed so that it allows its assembly and disassembly in a quick and simple manner, thereby simplifying these operations as well as reducing the cost of the assembly compared to conventional systems.

In the dashboard of the invention the assembly and attachment of the orientation grilles does not require welding operations nor additional mechanical components. In the dashboard of the invention the orientation grilles are mounted by a "bayonet" type union, with the grille components sliding in two directions, first being displaced along the Z-axis direction and then along the Y-axis direction.

According to the present invention, the opening of the dashboard in which the grille is mounted is provided on its longitudinal edges with internal protrusions that define a crenellated contour.

On its part, the orientation grille is transversally sub-divided into two identical and independent bodies, each of which is slightly shorter in length than half the length of the opening. Each of these bodies is limited by a wall that determines its contour and which is crossed by internal partitions. Extending outwards from the longitudinal surfaces of the wall are shoes which are located and sized such that they can be inserted by sliding vertically in the separation between consecutive protrusions of the dashboard opening. In addition, the shoes are distanced from the top edge of bodies by a length that is approximately twice the height of the protrusions of the opening. The shoes determine a sloping upper profile, with a downwards inclination towards the external end of the grille.

With the described construction the aforementioned protrusions and shoes are located and configured such that the shoes, after being inserted between the protrusions, can slide under said protrusions when the grilles are displaced longitudinally in opposite senses towards the external ends of the opening. When the two grille bodies reach the external end position a separation is established between them that will be closed by a central core.

The two bodies that form the grille are also provided on their ends with anchoring means. These means can consist in the external ends of tabs or tongues which are inserted in opposing housings conformed in the transverse ends of the dashboard opening, while on the internal adjacent ends the means consist of tabs which can be superposed and anchored to each other.

In order to aid a better understanding of the assembly and anchoring system for the orientation grilles in the dashboard of the invention, a more detailed description is provided below made with reference to the accompanying drawings where a non-limiting example of an embodiment is shown.

In the drawings:
Figure 1 is a plan view of a dashboard made according to the invention.
Figure 2 is an upper plan view of the orientation grille mounted in the opening of the dashboard of figure 1.
Figures 3 and 4 are perspective views of the left and right bodies of the grille of figure 2.
Figures 5 and 6 are cross sections of the dashboard opening, with the grille mounted, respectively along the lines V-V and VI-VI.
Figures 7 and 8 are longitudinal and cross sections of the dashboard opening, with the grille mounted, respectively along the lines VII-VII and VIII-VIII of figure 1.

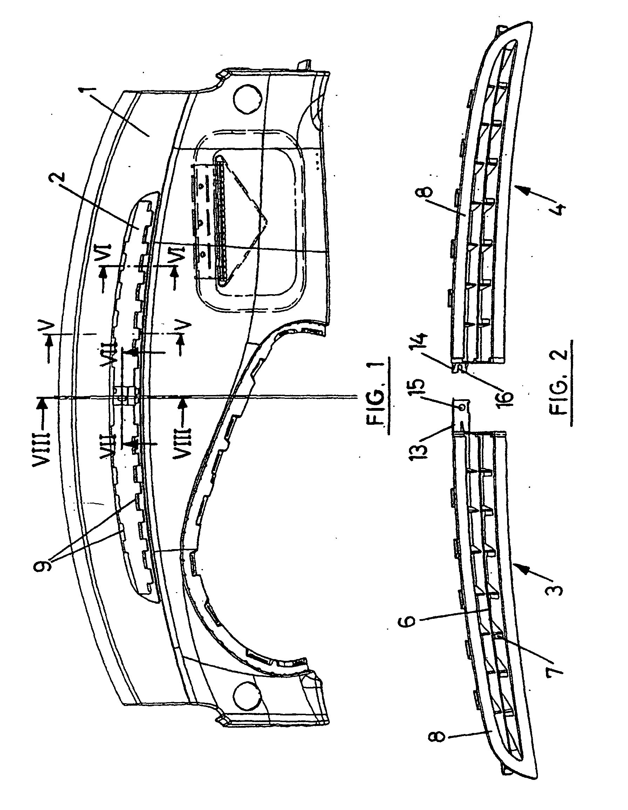

Figure 1 shows a plan view of an automobile dashboard, labelled in general by the number 1, which is provided on its anterior area with a longitudinal opening 2 for air passage in which is mounted a grille meant to direct the air towards the windshield, for internal de-fogging and external defrosting when required.

According to the present invention the grille is sub-divided into two identical independent bodies, each of which is slightly shorter in length than half the length of the opening 2. These two bodies are shown in figures 2 to 4, where they are labelled with the numbers 3 and 4. Each of these bodies consists of two longitudinal walls 5, an intermediate transverse partition 6 and transverse partitions 7, with the longitudinal walls 5 being joined on their ends by transverse closure walls, together defining a contour which ends on the top with a peripheral wing 8.

The opening 2, as can be better seen in figure 1, is provided on its longitudinal edges with internal protrusions 9 that define a crenellated contour.

On their part, each of the bodies 3 and 4 that define the grille is externally provided on its longitudinal walls 5 with shoes 10 that are located and sized such that they can be inserted in the separation between consecutive protrusions 9 of the opening 2. In addition, these shoes 10 are separated from the upper wing 8 of the bodies 3 and 4 by a distance that is approximately equal to the height of the protrusions 9.

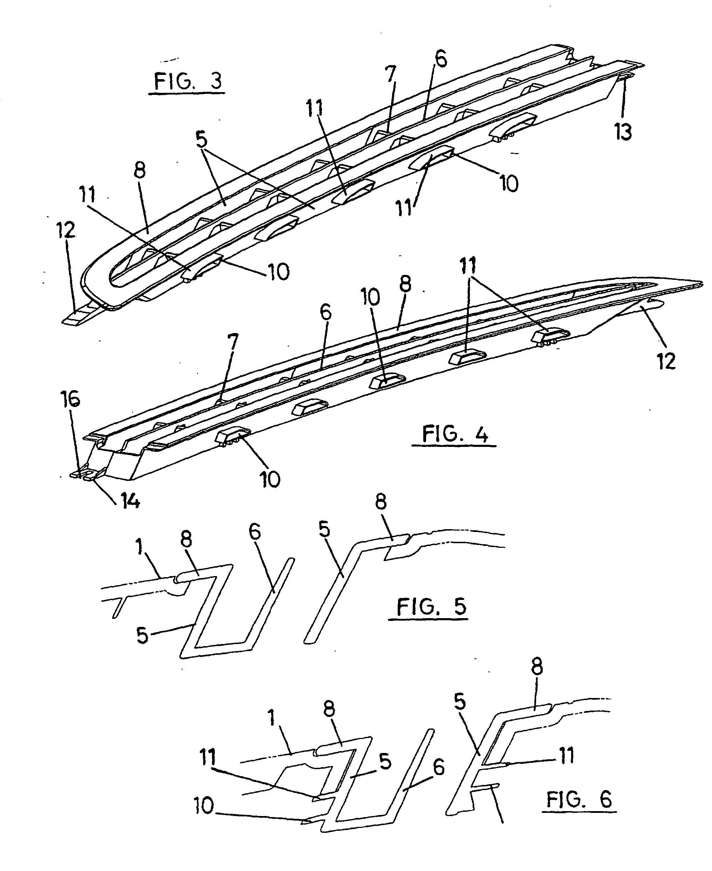

As can be better seen in figures 3 and 4, the shoes 10 have a sloping upper profile 11, with a downward inclination towards the external end of the grille body.

With the described construction, the protrusions 9 of the opening 2 and the shoes 10 of the grille bodies 3 and 4 are located and sized such that said shoes can be inserted in a downwards sense between each two consecutive protrusions 9 and then displaced until they are located under said protrusions, in order to act as retaining means to prevent an accidental detachment of the grille bodies.

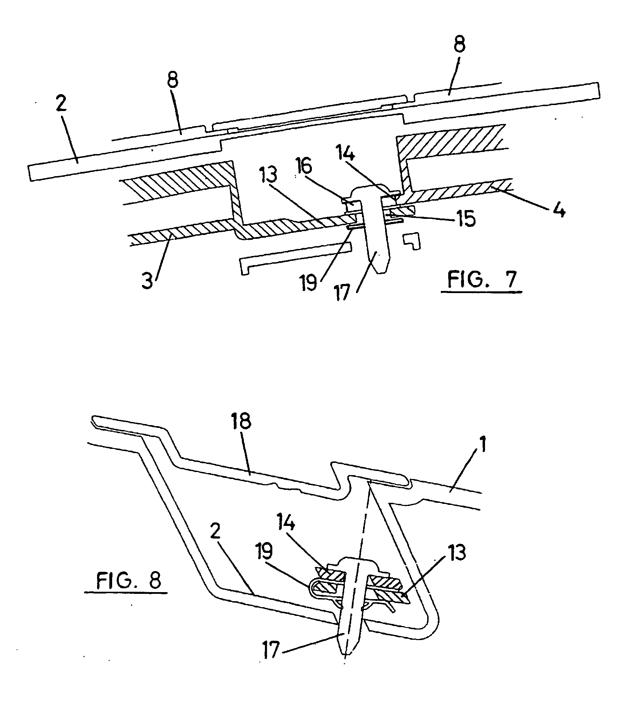

When the grille bodies 3 and 4 are inserted in the opening 2, with the shoes 10 passing between each two consecutive protrusions 9 of said opening, the upper wing 8 of said bodies rests on the dashboard 1, as shown in figure 5. When the bodies 3 and 4 slide outward, when reaching their end position, the shoes 10 are located under the protrusions 9 as shown in figure 6.

The bodies 3 and 4 of the shoes are provided on their external ends with tabs 12 which are inserted through housings established in the ends of the opening 2. At the adjacent internal ends the bodies 3 and 4 are also provided with axial tabs or tongues 13 and 14, the first of which is provided with an orifice 15 and the second with a longitudinal groove 16 that begins at its free transverse edge, with said groove and orifice being superposed and opposite each other, as shown in figure 7, in order to receive a locking pin 17. In this position, between the bodies 3 and 4 an intermediate empty space is left which is closed by a core or cover 18, figure 8. The pin 17 can be locked by a retaining element 19 which prevents its accidental exit.

With the described construction, the bodies 3 and 4 that form the grille are easily mounted by inserting the shoes 10 between each two consecutive protrusions 9 of the opening 2. When the wing 8 of the bodies 3 and 4 rests on the surface of the dashboard 1, the said bodies will be longitudinally displaced towards the outside in opposite senses. When they reach the end position, the end tabs 12 are inserted in housings provided for such purpose, while the internal tongues 13 and 14 are superposed to receive the locking pin 17. Then the core or cover 18 is fitted, closing the separation between the bodies 3 and 4 and thereby completing the assembly of the grille.

If the grille must be disassembled, it is only necessary to remove the core or cover 18, extract the pin 17 and then move the bodies 3 and 4 towards the centre and extract them upwards.

The walls and partitions of the bodies 3 and 4 of the grille shall have an inclination such that they direct the air flow suitably towards the windshield surface.

## Claims

1. Automobile dashboard comprising a longitudinal opening (2) for air passage with a small width with respect to its length, in which is mounted an orientation grille with an identical contour meant to direct the air towards the surface of the windshield, **characterised in that** the opening is provided in its longitudinal edges with internal protrusions that define a crenellated contour; and **in that** the grille is transversally sub-divided into two independent identical bodies (3, 4), each of which is shorter in length than half the length of the opening and is externally provided with shoes (10) that project out of the longitudinal surfaces, located and sized such that they can be inserted in the separation between consecutive protrusions (9) of the dashboard opening and set at a distance from the upper edge that is equal to the height of said protrusions, said shoes having a sloping upper profile (11) inclined downwards toward the external end of the grille body, with the aforementioned protrusions and shoes located such that once the shoes (10) have been inserted between the protrusions (9) they can move beneath said protrusions when displacing longitudinally the two grille bodies towards the ends of the opening, determining an intermediate separation that is closed by a central core; the two grille bodies further being provided with anchoring means on their ends.

2. Dashboard according to claim 1, **characterised in that** the anchoring means on the ends of the grille bodies consist of tabs (12) which project out of the external ends, meant to be inserted in housings provided in the dashboard opening, and axial tabs or tongues (13, 14) which project out of the internal end and are superposed to receive a locking pin or screw.

## Patentansprüche

1. Kraftfahrzeug-Armaturenbrett mit einer Längsöffnung (2) für den Luftdurchgang, die eine geringe Breite bezogen auf ihre Länge hat und in der ein Ausrichtgitter mit einer identischen Kontur angebracht ist, das dazu dient, die Luft zu der Oberfläche der Windschutzscheibe zu richten,
**dadurch gekennzeichnet,**
- **dass** die Öffnung in ihren Längsrändern mit inneren Vorsprüngen versehen ist, die eine Zinnenkontur bilden, und
- **dass** das Gitter quer in zwei unabhängige identische Körper (3, 4) unterteilt ist, von denen jeder in der Länge kürzer ist als die halbe Länge der Öffnung und außen mit Schuhen (10) versehen ist, die aus den Längsflächen vorstehen und so positioniert und bemessen sind, dass sie in den Trennraum zwischen aufeinanderfolgenden Vorsprüngen (9) der Armaturenbrettöffnung eingeführt und in einem Abstand von dem oberen Rand eingesetzt werden können, der gleich der Höhe der Vorsprünge ist,
- wobei die Schuhe ein schräg abfallendes oberes Profil (11) haben, das nach unten zu dem äußeren Ende des Gitterkörpers geneigt ist,
- wobei die vorstehenden Vorsprünge und Schuhe so angeordnet sind, dass, wenn die Schuhe (10) einmal zwischen die Vorsprünge (9) eingeführt sind, sie sich unter die Vorsprünge bewegen können, wenn die beiden Gitterkörper zu den Enden der Öffnung hin in Längsrichtung verschoben werden, wodurch ein Zwischentrennraum bestimmt wird, der durch einen zentralen Kern geschlossen ist, und
- wobei die beiden Gitterkörper weiterhin an ihren Enden mit Befestigungseinrichtungen versehen sind.

2. Armaturenbrett nach Anspruch 1, **dadurch gekennzeichnet, dass** die Befestigungseinrichtungen an den Enden der Gitterkörper aus Laschen (12), die aus den äußeren Enden für ein Einführen in Gehäuse vorstehen, die in der Armaturenbrettöffnung vorgesehen sind, und aus axialen Laschen oder Zungen (13, 14) bestehen, die aus dem inneren Ende vorstehen und für die Aufnahme eines Arretierstifts oder einer Schraube übereinander angeordnet sind.

## Revendications

1. Planche de bord de véhicule automobile comprenant une ouverture longitudinale (2) pour le passage de l'air avec une petite largeur par rapport à sa longueur, dans laquelle on monte une grille d'orientation avec un contour identique destiné à diriger l'air vers la surface du pare-brise, **caractérisé en ce que** l'ouverture est dotée, dans ses bords longitudinaux, de saillies internes qui définissent un contour crénelé ; et **en ce que** la grille est transversalement divisée en deux corps identiques indépendants (3, 4), dont l'un est plus court en longueur que la moitié de la longueur de l'ouverture et est doté à l'extérieur de patins (10) qui font saillie hors des surfaces longitudinales, positionnés et dimensionnés de sorte qu'ils peuvent être insérés dans la séparation située entre les saillies (9) consécutives de l'ouverture de la planche de bord et positionnés à une distance du bord supérieur qui est égale à la hauteur desdites saillies, lesdits patins ayant un profil supérieur incliné (11) incliné vers le bas vers l'extrémité externe du corps de grille, avec les saillies et les patins mentionnés précédemment situés de sorte qu'une fois que les patins (10) ont été insérés entre les saillies (9), ils peuvent se déplacer au dessous desdites saillies lorsqu'ils déplacent longitudinalement les deux corps de grille vers les extrémités de l'ouverture, déterminant une séparation intermédiaire qui est fermée par un noyau central ; les deux corps de grille étant dotés en outre de moyens d'ancrage sur leurs extrémités.

2. Planche de bord selon la revendication 1, **caractérisé en ce que** les moyens d'ancrage situés sur les extrémités des corps de grille se composent de pattes (12) qui font saillie hors des extrémités externes, prévues pour être insérées dans des logements prévus dans l'ouverture de la planche de bord, et des pattes ou languettes axiales (13, 14) qui font saillie hors de l'extrémité interne et sont superposées pour recevoir une goupille ou vis de blocage.
